# EUROPÄISCHE PATENTSCHRIFT

(11) **EP 0 598 078 B1**
(45) Veröffentlichungstag und Bekanntmachung des Hinweises auf die Patenterteilung: **20.09.1995**
(21) Anmeldenummer: 93909778.8
(22) Anmeldetag: 19.05.1993
(51) Int. Cl.: B60K 15/077

(54) **KRAFTSTOFFTANK MIT EINEM IN DIESEM ANGEORDNETEN BEHÄLTER**
FUEL TANK WITH A CONTAINER FITTED INSIDE IT
RESERVOIR A CARBURANT COMPORTANT UN RECIPIENT

(30) Priorität: 13.06.1992 DE 4219516
(43) Veröffentlichungstag der Anmeldung: 25.05.1994
(73) Patentinhaber: ROBERT BOSCH GMBH, 70442 Stuttgart (DE)
(72) Erfinder: RÜGER, Ernst, D-8028 Taufkirchen (DE); GEYER, Gerhard, D-8000 München 83 (DE); KLING, Martin, D-8000 München 50 (DE)
(86) Internationale Anmeldenummer: DE9300438
(87) Internationale Veröffentlichungsnummer: WO9325403

(56) Entgegenhaltungen:
- DE-C- 3 915 185
- FR-A- 2 639 405

## Beschreibung

### Stand der Technik

Die Erfindung geht aus von einem Kraftstofftank nach der Gattung des Hauptanspruchs. Es ist schon ein Kraftstofftank bekannt (DE-PS 39 15 185), bei dem in einem zwei mit Abstand voneinander liegende im Abstand oberhalb ihres Bodens miteinander verbundene Teil-Tanks aufweisenden Kraftstofftank zwei aus der Kraftstoff-Rückführleitung gespeiste Strahlpumpen angeordnet sind. Um eine zuverlässige Entleerung der beiden Teiltanks sicherzustellen, befindet sich jede der beiden Strahlpumpen in einem der beiden Teiltanks. Beide Strahlpumpen füllen einen in dem einen Teiltank angeordneten Behälter, aus dem ein Kraftstofförderaggregat den Kraftstoff saugt. Dies ist jedoch nur bei normalen Betriebsbedingungen gewährleistet.

### Vorteile der Erfindung

Der erfindungsgemäße Kraftstofftank mit den kennzeichnenden Merkmalen des Hauptanspruchs hat demgegenüber den Vorteil, daß auch bei schwierigen Betriebsbedingungen eine ordnungsgemäße Versorgung des Kraftstofförderaggregats mit Kraftstoff gewährleistet ist.

Solche Betriebsbedingungen können sich beispielsweise ergeben, wenn der Tank fast leergefahren ist und darüber hinaus eine längere Gefällstrecke oder eine längere Steigung zu überwinden ist. Auch bei einer längeren Kurvenfahrt des Kraftfahrzeuges können bei fast leergefahrenem Tank solche schwierigen Betriebsbedingungen entstehen. Dann schwappt nämlich der Restkraftstoff an einen Randbereich des Kraftstofftanks, so daß die Strahlpumpen möglicherweise keinen Kraftstoff mehr fassen und fördern können und der Behälter rasch entleert wird. Ein solcher Vorgang kann fatale Folgen haben.

Durch die in den Unteransprüchen aufgeführten Maßnahmen sind vorteilhafte Weiterbildungen und Verbesserungen des im Hauptanspruch angegebenen Kraftstofftanks möglich.

### Zeichnung

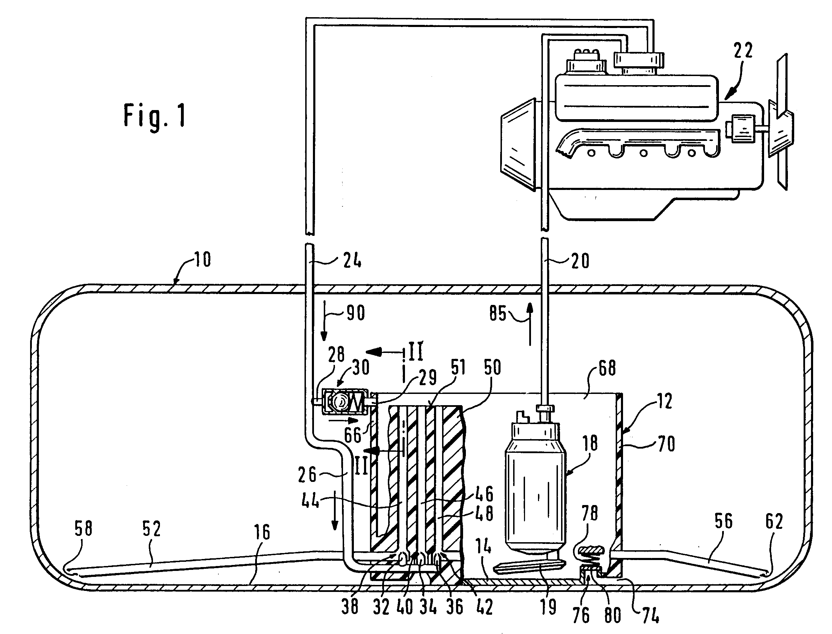

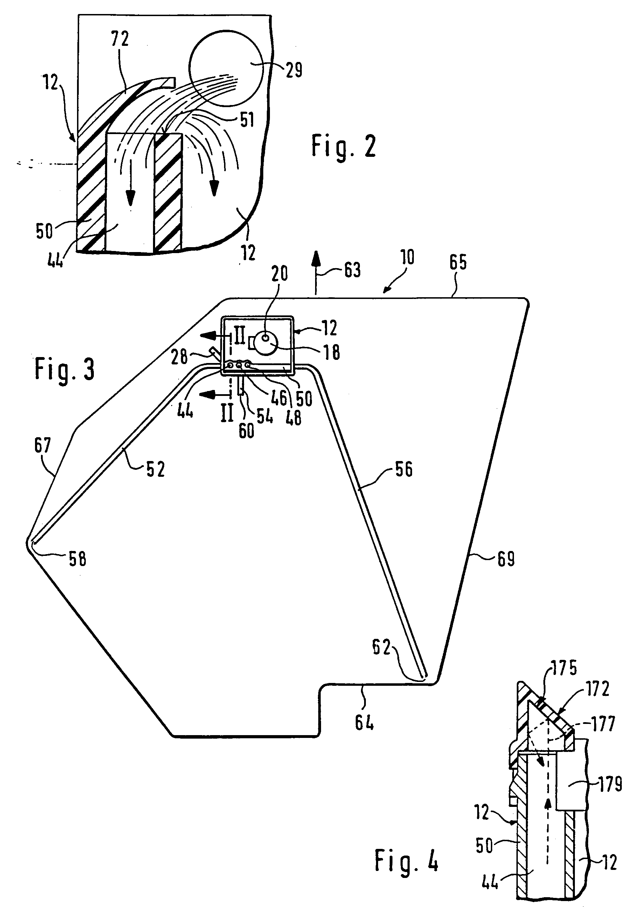

Ausführungsbeispiele der Erfindung sind in der Zeichnung dargestellt und in der nachfolgenden Beschreibung näher erläutert. Es zeigen Figur 1 eine unmaßstäbliche Prinzipdarstellung einer Kraftstoffversorgungseinrichtung für die Brennkraftmaschine eines Kraftfahrzeuges, mit einem im Schnitt dargestellten Kraftstoffvorratstank, einem in diesem angeordneten Behälter im Schnitt, mit einem Kraftstofförderaggregat und einen den Tank mit der Brennkraftmaschine verbindenden Leitungssystem, Figur 2 einen Teilschnitt durch den Behälter entlang der Linie II-II in Figur 1 in vergrößerter Darstellung, Figur 3 eine Draufsicht auf den verkleinert dargestellten Kraftstoffvorratstank, bei entfernter Tankoberwand und Figur 4 einen Teilschnitt gemäß Figur 2 durch einen anders ausgebildeten Behälter.

### Beschreibung der Ausführungsbeispiele

Ein in Figur 1 dargestellter Kraftstoffvorratstank 10 ist in seinem Inneren mit einem Behälter 12 versehen, dessen Boden 14 auf dem Boden 16 des Kraftstoffvorratstanks 10 aufliegt. In dem Behälter 12 ist ein Kraftstofförderaggregat 18 angeordnet. Das Kraftstofförderaggregat 18 saugt aus dem Inneren des Behälters 12 Kraftstoff an und drückt diesen über eine Versorgungsleitung 20 zu einer Brennkraftmaschine 22 eines nicht näher dargestellten Kraftfahrzeuges. Da das Förderaggregat mehr Kraftstoff an die Brennkraftmaschine 22 liefert als diese verbraucht, wird eine gewisse Überschußmenge an Kraftstoff über eine Rückführleitung 24 wieder dem Kraftstoffvorratstank 10 zugeführt. Die Rückführleitung 22 teilt sich innerhalb des Kraftstoffvorratstankes 10 in eine Versorgungsleitung 26 für noch näher zu beschreibende Strahlpumpen und einen Bypass 28, der über ein Überdruckventil 30 direkt in den Behälter 12 führt. Wie Figur 1 weiter zeigt, sind am Endabschnitt der Versorgungsleitung 26 drei Treibdüsen 32, 34, 36 ausgebildet die jeweils zu einer Strahlpumpe 38, 40, 42 gehören. Den Treibdüsen 32, 34, 36 zugeordnete Mischrohre 44, 46 und 48 sind in der einen Seitenwand 50 des Behälters 12 ausgebildet. Ebenso ist die Ausbildung der Treibdüsen 32, 34, 36 in der Seitenwand 50 vorgesehen. Von der Seitenwand 50 ist in Figur 1 lediglich ein Fragment im Schnitt dargestellt. Dieses Fragment zeigt die stehende Anordnung der Strahlpumpen 38, 40, 42, so daß deren Mischrohre 44, 46, 48 am oberen Randbereich der Seitenwand 50 münden. Die Wand 50 des Behälters 12 bildet also ein Bauelement, an dem die drei Strahlpumpen 38, 40, 42 angeordnet bzw. in dieses integriert sind. Jede Strahlpumpe 38, 40, 42 ist mit einer Saugleitung 52, 54, 56 (Figur 3) versehen, über welche der zu fördernde Kraftstoff in den die Treibdüsen 32, 34, 36 umgebenden Mischbereich der Strahlpumpen 38, 40, 42 gelangt. Dabei sind die Saugleitungen 52, 54, 56 so geführt, daß deren von der Behälterwand 50 abgewandte Mündungen 58, 60, 62 mit Abstand voneinander liegen. Dies ist insbesondere aus Figur 3 ersichtlich, wo weiter zu sehen ist, daß die Mündungen 58 und 62 im Bereich der beiden einander gegenüberliegenden Seitenbereichen des Tanks 10 angeordnet sind. Die Bezeichnung Seitenbereiche bezieht sich dabei auf die Fahrtrichtung des Kraftfahrzeuges, welche in Figur 3 durch einen Pfeil 63 dargestellt ist. Weiter zeigt Figur 3, daß eine der Mündungen 62 bezogen auf die Fahrtrichtung (Pfeil 63) sich im Bereich der hinteren Wand 64 des Kraftstoffvorratstank 10 befindet. Die dritte Saugleitung 54, welche der in Figur 1 zwischen den beiden Staustrahlpumpen 38 und 42 liegenden mittleren Staustrahlpumpe 34 zugeordnet ist, hat eine Mündung 60, die sich im vorderen Bereich des Kraftstoffvorratstanks 10 befindet. Wie Figur 1 weiter zeigt, ist die Wand 50 des Behälters 12 etwas niedriger als die anderen drei Seitenwände 66, 68, 70. Dabei weist die Seitenwand 66 den Bypass 28 mit dem Rückschlagventil 30 auf. Die behälterseitige Bypassmündung 29 liegt, bezogen auf den Behälterboden 14, oberhalb der oberen Kante 51 der Behälterwand 50. Somit liegt die Mündung 29 auch oberhalb der Mündungen der Mischrohre 44, 46 und 48. Die Führung der Bypassleitung 28 ist so ausgerichtet, daß die Mündung 29 der Bypassleitung 28 auf die Mündungen der Mischrohre 44, 46, 48 an der Oberkante 51 der Wand gerichtet ist. Wie Figur 2 zeigt, erstreckt sich von der Außenseite der Behälterwand 50 ein Prall- oder Führungsansatz 72 über die Mündung des im Schnitt dargestellten Mischrohres 44. Eine solche Ausgestaltung ist bei jedem der Mischrohre 44, 46, 48 vorgesehen. Diese Ansätze 72 können für alle Mischrohre durch einen einzigen Ansatz 72 ausgebildet sein. Der Ansatz 72 erstreckt sich zumindest so weit auf die Mündung 29 der Bypassleitung 28 zu, daß die Mischrohre 44, 46, 48 mit Abstand von deren Mündungen überdeckt sind. Schließlich zeigt Figur 1, daß der Behälter 12 einen Rücksprung 74 gegenüber dem Tankboden 14 aufweist. In diesem Bereich des Rücksprungs 74 weist der Behälterboden 14 ein Rückschlagventil 76 auf, dessen Schließfeder 78 das Schließglied 80 mit einer nur minimalen Kraft in Schließstellung hält.

Im Betrieb arbeitet die Kraftstoffversorgungseinrichtung wie folgt:
Während des Betriebs der Brennkraftmaschine 22 fördert das Förderaggregat 18 Kraftstoff aus dem Behälter 12 über die Versorgungsleitung 20 zur Brennkraftmaschine 22. Die von dem Förderaggregat geförderte Kraftstoffmenge (angedeutet durch einen Pfeil 85 in Figur 1) wird etwa zur Hälfte von der Brennkraftmaschine 22 verbraucht. Die restlichen 50 % fließen als Überschuß (dargestellt durch den Pfeil 90) über die Rückleitung 24 wieder in den Tank 12. Dabei teilt sich dieses Rückflußvolumen in zwei Teile, wobei der eine Teil über die Versorgungsleitung 26 den Strahlpumpen 38, 40, 42 zugeführt wird, während eine von diesen Strahlpumpen nicht benötigte Menge an Kraftstoff einen Überdruck in der Rückführleitung 24 ausbildet, der zum Öffnen des Überdruckventils 30 im Bypass 28 führt. Dadurch wird die von den Strahlpumpen 38, 40, 42 nicht benötigte Kraftstoffmenge direkt in den Behälter 12 geleitet, wobei dieser Kraftstoff über die Mündung 29 der Bypassleitung 28 austritt und gegen den Ansatz 72 der Wand 50 prallt und dort in die Mischrohre 44, 46, 48 geleitet wird. Dies ist insbesondere dann von Bedeutung, wenn beim Starten der Brennkraftmaschine die Mischrohre 44, 46 und 48 über die Saugleitungen 52, 54 und 56 leergelaufen sind. Durch die Befüllung der Mischrohre 44, 46 und 48 von oben her über die Bypassleitung 28 wird eine rasche Füllung der Mischrohre und damit ein rasches Einsetzen der Pumpwirkung der Strahlpumpen 38, 40 und 42 erreicht. Dem gleichen Zweck dient der Ansatz 72 aber auch dadurch, daß über die Treibdüsen 32, 34, 36 nach oben gespritzte Medium zumindest zum Teil von dem Ansatz 72 durch die Aufprallwirkung wieder zurück in die Mischrohre 44, 46, 48 geleitet wird. Eine Alternative zur Ausgestaltung gemäß Figur 2 ist in Figur 4 dargestellt. Dort ist anstelle des Ansatzes 72 (Fig. 2) eine Kappe 172 auf das Mischrohr 44 aufgerastet, deren schräggestelltes Pralldach 175 den von der Strahlpumpe 38 erzeugte Treibstrahl so ablenkt, wie dies durch die gestrichelte Linie 177 angedeutet ist. Es wird also für eine rasche Füllung des Mischrohres 44 gesorgt. Ein seitliches Fenster 179 gestattet den Übertritt des geförderten Kraftstoffs in den Behälter 12.

Das Rückschlagventil 76 ermöglicht, daß bei Erstbefüllung oder nach Leerfahren des Tankes bereits mit einer geringen Kraftstoffüllmenge die Kraftstoffpumpe 18 auf ihrer Saugseite 19 mit Kraftstoff versorgt ist und die Brennkraftmaschine in Betrieb gesetzt werden kann.

Weiter sorgt Ansatz 72 bzw. die Außenseite des Pralldachs 175 für eine Ableitung des aus der Mündung 29 austretenden Kraftstoffstroms in das Innere des Behälters 12, so daß der überwiegende Teil der über die Rückführleitung 24 dem Behälter zugeführte Restmenge an Kraftstoff in den Behälter 12 gelangt und damit dem Kraftstofförderaggregat 18 zur Verfügung steht. Dies ist insbesondere dann wichtig, wenn der Kraftstofftank 10 nur noch eine minimale Füllung aufweist und darüber hinaus das Kraftfahrzeug eine länger andauernde Berg- oder Talfahrt vor sich hat. Dann nämlich schwappt der im Tank 10 befindliche Restkraftstoff entweder nach hinten in den Bereich der Rückwand 64 oder nach vorn an die Vorderwand 65 des Tanks 10. In beiden Fällen befindet sich jedoch dort die Mündung 62 der Saugleitung 56 bzw. die Mündung 60 der Saugleitung 54. Dadurch ist in beiden Fällen auch bei dieser schwierigen Betriebsbedingung für eine zuverlässige Füllung des Behälters 12 gesorgt. Wenn jedoch das Kraftfahrzeug bei minimaler Tankfüllung eine länger andauernde Kurvenfahrt ausführt, wird der Restkraftstoff in den Bereich einer der Seitenwände 67 bzw. 69 gedrückt, wo sich jedoch die Mündungen 58 bzw. 62 der Saugleitungen 52 bzw. 56 befinden. Somit ist auch bei dieser schwierigen Betriebsbedingung für eine ordnungsgemäße Füllung des Behälters 12 gesorgt.

## Patentansprüche

1. Kraftstofftank (10) mit einem in diesem angeordneten Behälter (12), aus dem ein Förderaggregat (18) Kraftstoff zur Brennkraftmaschine (22) eines Kraftfahrzeuges pumpt und in dem zur Füllung des Behälters mehrere an einem von dem Förderaggregat mit Kraftstoff beschickten Leitungssystem angeschlossene Strahlpumpen angeordnet sind, deren Mischrohre in den Behälter münden, dadurch gekennzeichnet, daß am Leitungssystem (20, 24, 26) angeschlossene Strahlpumpen (38, 40, 42) an einem gemeinsamen Bauelement (50) angeordnet sind und daß zu jedem Mischrohr (44, 46, 48) eine Saugleitung (52, 54, 56) führt, deren von dem Bauelement (50) entfernte Mündungen (58, 60, 62) im Tank (10) mit Abstand voneinander liegen.

2. Kraftstofftank nach Anspruch 1, dadurch gekennzeichnet, daß das Bauelement mit einer zum Behälter (12) gehörenden Wand (50) fest verbunden ist.

3. Kraftstofftank nach einem der Ansprüche 1 oder 2, dadurch gekennzeichnet, daß das Bauelement durch eine Wand (50) des Behälters (12) gebildet ist.

4. Kraftstofftank nach einem der Ansprüche 1 bis 3, dadurch gekennzeichnet, daß die Mischrohre (44, 46, 48) der Strahlpumpen (38, 40, 42) in dem Bauelement (50) bezüglich des Tankbodens (16) stehend angeordnet sind und im oberen Randbereich (51) des Bauelements (50) münden und daß das Bauelement (50) einen Abfluß in den Behälter (12) aufweist.

5. Kraftstofftank nach einem der Ansprüche 1 bis 4, dadurch gekennzeichnet, daß sich ein zu dem Leitungssystem gehörender Leitungsabschnitt (26) in dem Bauelement (50) teilt und in die jeweiligen Treibdüsen (32, 34, 36) der Strahlpumpen (38, 40, 42) übergeht.

6. Kraftstofftank nach einem der Ansprüche 1 bis 5, dadurch gekennzeichnet, daß, bezogen auf die Fahrtrichtung (Pfeil 63) des Kraftfahrzeuges, Mündungen (58, 62) der Saugrohre (52, 56) in den beiden Seitenbereichen des Tanks (10) angeordnet sind.

7. Kraftstofftank nach Anspruch 6, dadurch gekennzeichnet, daß wenigstens die Mündung (62) eines Saugrohres (56) im hinteren Tankbereich angeordnet ist.

8. Kraftstofftank nach einem der Ansprüche 6 oder 7, dadurch gekennzeichnet, daß wenigstens die Mündung (60) eines Saugrohres (54) im vorderen Tankbereich angeordnet ist.

9. Kraftstofftank nach einem der Ansprüche 1 bis 8, dadurch gekennzeichnet, daß der Kraftstofftank (10) drei Strahlpumpen (38, 40, 42) aufweist.

10. Kraftstofftank nach einem der Ansprüche 1 bis 9, dadurch gekennzeichnet, daß die Strahlpumpen (38, 40, 42) in einem Leitungsabschnitt liegen, der zu einer von der der Brennkraftmaschine (22) in den Vorratstank (10) führenden Rücklaufleitung (24, 26) des Leitungssystems gehört.

11. Kraftstofftank nach Anspruch 10, dadurch gekennzeichnet, daß in der Rücklaufleitung (24) in Strömungsrichtung des Kraftstoffs vor den Strahlpumpen (38, 40, 42) ein Überdruckventil (30) angeordnet ist, das beim Öffnen die Rücklaufleitung (24) direkt mit dem Behälter (12) verbindet.

12. Kraftstofftank nach Anspruch 11, dadurch gekennzeichnet, daß die behälterseitige Mündung (29) einer vom Überdruckventil (30) in den Behälter (12) führenden Verbindungsleitung (28) oberhalb der Mündungen der Mischrohre (44, 46, 48) der Strahlpumpen (38, 40, 42) angeordnet und auf diese gerichtet ist.

13. Kraftstofftank nach einem der Ansprüche 1 bis 12, dadurch gekennzeichnet, daß die behälterseitigen Mündungen der Mischrohre (44, 46, 48) gegen Prallelemente (72) gerichtet sind.

14. Kraftstofftank nach Anspruch 13, dadurch gekennzeichnet, daß als Prallelement auf jedes Mischrohr (44, 46, 48) eine Kappe (172) mit einem schräggestellten Pralldach (175) aufgerastet ist.

15. Kraftstofftank nach Anspruch 14, dadurch gekennzeichnet, daß die Kappen (172) für alle Mischrohre (44, 46, 48) an einem gemeinsamen Bauelement ausgebildet sind.

16. Kraftstofftank nach einem der Ansprüche 1 bis 15, dadurch gekennzeichnet, daß im Behälterboden (14) eine mit einem Rückschlagventil (76) versehene Einlaßöffnung vorgesehen ist.

## Claims

1. Fuel tank (10) with a vessel (12) which is arranged therein and out of which a feed unit (18) pumps fuel to the internal-combustion engine (22) of a motor vehicle and in which, in order to fill the vessel, are arranged a plurality of jet pumps which are connected to a conduit system supplied with fuel by the feed unit and the mixing pipes of which open into the vessel, characterized in that jet pumps (38, 40, 42) connected to the conduit system (20, 24, 26) are arranged on a common structural element (50), and in that there leads to each mixing pipe (44, 46, 48) a suction conduit (52, 54, 56), of which the mouths (58, 60, 62) remote from the structural element (50) are located at a distance from one another in the tank (10).

2. Fuel tank according to Claim 1, characterized in that the structural element is fixedly connected to a wall (50) belonging to the vessel (12).

3. Fuel tank according to one of Claims 1 or 2, characterized in that the structural element is formed by a wall (50) of the vessel (12).

4. Fuel tank according to one of Claims 1 to 3, characterized in that the mixing pipes (44, 46, 48) of the jet pumps (38, 40, 42) are arranged vertically in the structural element (50) in relation to the tank bottom (16) and open out in the upper edge region (51) of the structural element (50), and in that the structural element (50) has a flow-off into the vessel (12).

5. Fuel tank according to one of Claims 1 to 4, characterized in that a conduit portion (26) belonging to the conduit system divides in the structural element (50) and merges into the respective propulsion nozzles (32, 34, 36) of the jet pumps (38, 40, 42).

6. Fuel tank according to one of Claims 1 to 5, characterized in that mouths (58, 62) of the suction pipes (52, 56) are arranged in the two side regions of the tank (10) in relation to the direction of travel (arrow 63) of the motor vehicle.

7. Fuel tank according to Claim 6, characterized in that at least the mouth (62) of one suction pipe (56) is arranged in the rear tank region.

8. Fuel tank according to one of Claims 6 or 7, characterized in that at least the mouth (60) of one suction pipe (54) is arranged in the front tank region.

9. Fuel tank according to one of Claims 1 to 8, characterized in that the fuel tank (10) has three jet pumps (38, 40, 42).

10. Fuel tank according to one of Claims 1 to 9, characterized in that the jet pumps (38, 40, 42) are located in a conduit portion which belongs to a return conduit (24, 26) of the conduit system leading from the internal-combustion engine (22) into the supply tank (10).

11. Fuel tank according to Claim 10, characterized in that a pressure-relief valve (30) is arranged in the return conduit (24) upstream of the jet pumps (38, 40, 42) in the direction of flow of the fuel and, when opening, connects the return conduit (24) directly to the vessel (12).

12. Fuel tank according to Claim 11, characterized in that the vessel-side mouth (29) of a connecting conduit (28) leading from the pressure-relief valve (30) into the vessel (12) is arranged above the mouths of the mixing pipes (44, 46, 48) of the jet pumps (38, 40, 42) and is directed onto the said mouths.

13. Fuel tank according to one of Claims 1 to 12, characterized in that the vessel-side mouth of the mixing pipes (44, 46, 48) are directed towards baffle elements (72).

14. Fuel tank according to Claim 13, characterized in that a cap (172) having an inclined baffle roof (175) is locked as a baffle element onto each mixing pipe (44, 46, 48).

15. Fuel tank according to Claim 14, characterized in that the caps (172) for all the mixing pipes (44, 46, 48) are formed on a common structural element.

16. Fuel tank according to one of Claims 1 to 15, characterized in that an inlet orifice equipped with a non-return valve (76) is provided in the vessel bottom (14).

## Revendications

1. Réservoir de carburant (10) auquel est associé un récipient (12) dans lequel un ensemble de pompage (18) pompe le carburant alimentant le moteur à combustion interne (22) d'un véhicule automobile, et plusieurs pompes à jet sont reliées à un système de conduites alimenté en carburant par l'ensemble de pompage pour remplir le récipient, les tubes de mélange de ces pompes à jet débouchant dans le récipient, caractérisé en ce que les pompes à jet (38, 40, 42), reliées au système de conduites (20, 24, 26), appartiennent à un élément de construction commun (50), et en ce qu'une conduite d'aspiration (52, 54, 56) est reliée à chaque tube de mélange (44, 46, 48), les entrées (58, 60, 62) des conduites d'aspiration, éloignées de l'élément de construction (50), se trouvant situées à distance dans le réservoir (10).

2. Réservoir de carburant selon la revendication 1, caractérisé en ce que l'élément de construction est relié solidairement à une paroi (50) appartenant au récipient (12).

3. Réservoir de carburant selon l'une des revendications 1 ou 2, caractérisé en ce que l'élément de construction est une paroi (50) du récipient (12).

4. Réservoir de carburant selon l'une des revendications 1 à 3, caractérisé en ce que les tubes de mélange (44, 46, 48) des pompes à jet (38, 40, 42) sont montés debout dans l'élément de construction (50), par rapport au fond (16) du réservoir, et ces tubes de mélange débouchent dans la zone de bord supérieure (51) de l'élément de construction (50), ce dernier ayant une sortie vers le récipient (12).

5. Réservoir de carburant selon l'une des revendications 1 à 4, caractérisé en ce qu'un segment de conduite (26) appartenant au système de conduite se subdivise dans l'élément de construction (50) et rejoint les buses d'entraînement respectives (32, 34, 36) des pompes à jet (38, 40, 42).

6. Réservoir de carburant selon l'une des revendications 1 à 5, caractérisé en ce que, rapportées à la direction de déplacement (flèche 63) du véhicule, les entrées (58, 62) des tubes d'aspiration (52, 56) se trouvent dans les deux zones latérales du réservoir (10).

7. Réservoir de carburant selon la revendication 6, caractérisé en ce qu'au moins l'entrée (62) d'un tube d'aspiration (56) se trouve dans la zone arrière du réservoir.

8. Réservoir de carburant selon l'une des revendications 6 ou 7, caractérisé en ce qu'au moins l'entrée (60) d'un tube d'aspiration (54) se trouve dans la zone avant du réservoir.

9. Réservoir de carburant selon l'une des revendications 1 à 8, caractérisé en ce que le réservoir (10) comporte trois pompes à jet (38, 40, 42).

10. Réservoir de carburant selon l'une des revendications 1 à 9, caractérisé en ce que les pompes à jet (38, 40, 42) se situent dans un segment de conduite qui appartient à une conduite de retour (24, 26) du système de conduites, allant du moteur à combustion interne (22) dans le réservoir (10).

11. Réservoir de carburant selon la revendication 10, caractérisé en ce qu'une soupape de surpression (30) est prévue dans la conduite de retour (24), en amont des pompes à jet (38, 40, 42) dans le sens de circulation du carburant, cette soupape de surpression, lorsqu'elle s'ouvre, reliant directement la conduite de retour (24) au récipient (12).

12. Réservoir de carburant selon la revendication 11, caractérisé en ce que l'orifice (29) du côté du récipient d'une conduite de liaison (28) allant de la soupape de surpression (30) dans le récipient (12), se trouve au-dessus des embouchures des tubes de mélange (44, 46, 48) des pompes à jet (38, 40, 42) et est dirigé vers ceux-ci.

13. Réservoir de carburant selon l'une des revendications 1 à 12, caractérisé en ce que les embouchures des tubes de mélange (44, 46, 48), du côté du récipient, sont dirigées vers des éléments brise-jet (72)

14. Réservoir de carburant selon la revendication 13, caractérisé en ce que comme élément brise-jet, au-dessus de chaque tube de mélange (44, 46, 48), il y a un capuchon (172) avec une surface brise-jet (175) dirigée en biais.

15. Réservoir de carburant selon la revendication 14, caractérisé en ce que les capuchons (172) de tous les tubes de mélange (44, 46, 48) appartiennent à un même élément de construction.

16. Réservoir de carburant selon l'une des revendications 1 à 15, caractérisé en ce que le fond (14) du réservoir comporte une ouverture d'entrée munie d'une soupape anti-retour (76).
